# EUROPEAN PATENT SPECIFICATION

(11) **EP 4 307 977 B1**
(45) Date of publication and mention of the grant of the patent: **29.01.2025**
(21) Application number: 21713632.4
(22) Date of filing: 17.03.2021
(51) Int. Cl.: A47L 9/28, A47L 11/32, A47L 11/40

(54) **ROBOTIC CLEANER SYSTEM AND THERETO RELATED METHOD**
ROBOTERREINIGUNGSSYSTEM UND DAZUGEHÖRIGES VERFAHREN
SYSTEME DE NETTOYAGE ROBOTIQUE ET PROCEDE ASSOCIE

(43) Date of publication of application: 24.01.2024
(73) Proprietor: AKTIEBOLAGET ELECTROLUX, 105 45 Stockholm (SE)
(72) Inventor: WENNERSTRÖM, Magnus, 105 45 Stockholm (SE); KLINTEMYR, Andreas, 105 45 Stockholm (SE)
(74) Representative: Electrolux Group Patents
(86) International application number: PCT/EP2021/056886
(87) International publication number: WO 2022/194373

(56) References cited:
- DE-A1- 102010 017 211
- DE-A1- 102016 124 684
- US-A- 5 959 423

## Description

### TECHNICAL FIELD

The present disclosure relates to a robotic cleaner system and a method for operating a robotic cleaner system.

### BACKGROUND

A robotic vacuum cleaner forms a self-propelling unit provided with a drive arrangement comprising a control arrangement configured to control autonomous movement of the robotic vacuum cleaner along a surface to be cleaned. The control arrangement comprises microprocessor and navigation means including one or more sensors providing input to assist in controlling the movement of the robotic vacuum cleaner.

A robotic cleaner may comprise a brush roll arranged to rotate about a horizontal axis and a brush arranged to rotate about a vertical axis. Such brushes may be configured to propel dust and debris directly or indirectly towards and/or into a nozzle inlet of a housing of the robotic vacuum cleaner. The nozzle inlet faces the surface to be cleaned. A motor fan unit of the robotic vacuum cleaner is arranged in fluid communication with the nozzle inlet. Dust and debris sucked or otherwise propelled into the nozzle inlet is guided into a debris receptacle of the robotic vacuum cleaner. The debris receptacle is emptied, or replaced, when deemed necessary or desirable by a user or by the control arrangement of the robotic vacuum cleaner.

One brush of the robotic cleaner may be a so-called side brush. Commonly, a side brush is rotatable about a substantially vertical axis and comprises bristles extending outwardly from the axis. Seen along a traveling direction of the robotic vacuum cleaner, the side brush is arranged towards a lateral side of the brush roll and the robotic vacuum cleaner. The bristles of the side brush may extend outside a main body of the robotic vacuum cleaner seen in a top view of the cleaner.

A robotic vacuum cleaner configured for domestic use is suitably sized such that it can travel underneath furniture, preferably even underneath low furniture such as underneath a sofa or a bed.

DE102010017211 discloses a method for cleaning a floor utilising a self-propelled floor cleaning device. In a base station, the floor cleaning device switches between cleaning tools and/or cleaning agent suitable for cleaning different regions of the floor, which may include a stained portion of the floor.

### SUMMARY

The side brush is a particular kind of brush having a substantially vertically extending axis of rotation and being provided with radially extending bristles. The purpose of the side brush is to propel dust and debris from a lateral side portion of the robotic cleaner towards a more central portion underneath the robotic cleaner such that the dust and debris is more easily directed into a nozzle inlet of the robotic cleaner.

It has been realised that a side brush of a robotic vacuum cleaner is subjected to substantial wear when used on a carpeted surface.

It would be advantageous to overcome this drawback. In particular, it would be desirable to provide a robotic cleaner system comprising a robotic vacuum cleaner, which system is adaptable to the cleaning of different types of surfaces. To better address one or more of these concerns, a robotic cleaner system and/or a method for operating a robotic cleaner system having the features defined at least in one of the independent claims is/are provided.

According to an aspect, there is provided a robotic cleaner system comprising a robotic vacuum cleaner configured for autonomous travel along a surface to be cleaned and a stationary base station. The robotic vacuum cleaner comprises a first brush arranged to rotate about a horizontal axis extending substantially perpendicularly to a main traveling direction of the robotic vacuum cleaner and having a first brush width along the horizontal axis, a second brush arranged to rotate about a substantially vertical axis, and a control arrangement. The second brush is detachably connected to a main body of the robotic vacuum cleaner. The stationary base station is configured for receiving the second brush. The second brush is a side brush comprising bristles extending laterally outside the first brush width seen along the main traveling direction. The control arrangement is configured to disengage the second brush from the main body in the stationary base station when a surface portion of the surface to be cleaned is a carpeted surface portion.

Since the second brush is a side brush as defined above and the control arrangement is configured to disengage the second brush from the main body in the stationary base station when a surface portion of the surface to be cleaned is a carpeted surface portion, unnecessary wear of the side brush due to use on carpeted surface portions is avoided.

Accordingly, the side brush will have a longer service life than if used on carpeted surface portions.

This solution provides the further advantage of avoiding drift from an intended traveling path of the robotic vacuum cleaner due to the engagement of the side brush with a carpeted surface portion. Such drift may be considerable and thus, must be compensated for in order for the robotic vacuum cleaner not to lose orientation on the surface to be cleaned. Moreover, entangling of the side brush with carpet tassels is avoided.

The robotic vacuum cleaner may be a self-propelling unit configured to travel along the surface to be cleaned. The robotic vacuum cleaner may preferably be configured for domestic use, e.g. sized such that it may travel underneath at least some domestic furniture. The robotic vacuum cleaner may be controlled by the control arrangement to be guided along the surface to be cleaned. Navigation information utilised by the control arrangement may be provided e.g. by sensors, and/or stored and/or calculated position information, and/or beacons.

The stationary base station may be positioned in connection with the surface to be cleaned. The robotic vacuum cleaner may be parked in the stationary base station during inoperative periods of the robotic vacuum cleaner. The stationary base station may be configured for charging a battery of the robotic vacuum cleaner.

The robotic vacuum cleaner comprises a motor fan unit and a receptacle for dust and/or debris. The motor fan unit produces an airflow through the nozzle inlet and towards the receptacle for dust and/or debris.

The first brush may be arranged to propel dust and/or debris towards and/or into the nozzle inlet.

The first brush extending substantially perpendicularly to the main travelling direction may mean that the first brush extends within a range of 0 - 15 degrees perpendicular to the main travelling direction. The second brush extending about a substantially vertical axis may mean that the second brush extends within a range of 0 - 15 degrees to the vertical direction. The horizontal axis and the substantially vertical axis relate to the robotic vacuum cleaner when being positioned in an operating position on a horizontal surface to be cleaned.

As mentioned above, the second brush is a side brush comprising bristles extending laterally outside the first brush width seen along the main traveling direction. Accordingly, as such the side brush is arranged at a side compared to the first brush. The side brush may be configured to sweep dust and/or debris from beside and/or a side portion of main body of the robotic vacuum cleaner to underneath the main body where the first brush and/or suction produced at the nozzle inlet reaches the dust and/or debris for further transportation into the receptacle for dust and/or debris. The side brush may sweep dust and/or debris towards the first brush and/or the nozzle inlet. The side brush may be arranged to reach into narrow corners and crevices where the first brush underneath the robotic vacuum cleaner and/or suction produced at the nozzle inlet does not reach. Accordingly, the bristles of the side brush may extend laterally outside the main body of the robotic vacuum cleaner.

The term "main body" of the robotic vacuum cleaner relates to the part of the robotic vacuum cleaner that travels around the surface to be cleaned. The first brush and the second/side brush are attached to the main body. The main body includes the drive arrangements, which may comprise one or more electric motors, and which rotate the first brush and the second/side brush.

According to embodiments, the control arrangement may be configured to engage the second brush with the main body in the stationary base station when a surface portion of the surface to be cleaned is a hard floor surface portion. In this manner, the assistance of the second/side brush may be utilised during cleaning of hard floor surface portions. The benefits of the sweeping of dust and/or debris to underneath the main body and/or towards the first brush and/or the nozzle inlet by the second/side brush and optionally the reaching into corners and crevices may be utilised.

According to embodiments, the control arrangement may be configured to store surface related data of the surface to be cleaned, the surface related data comprising positional data related to the carpeted surface portion and/or to the hard floor surface portion. In this manner, the control arrangement may be provided with a map and/or positional data table of the surface to be cleaned, the map and/or data table including the carpeted surface portion and the hard floor surface portion. The positional data may be applied when deciding whether the side brush is to be disengaged from, or engaged with, the main body of the robotic vacuum cleaner.

According to some embodiments, a user may provide the positional data related to the carpeted surface portion and/or to the hard floor surface portion to the control arrangement.

According to some embodiments, the control arrangement may comprise one or more sensors for determining part of the surface related data, and the one or more sensors may be utilised for determining the carpeted surface portion and/or the hard floor surface portion. In this manner, the control arrangement may be configured for establishing the surface related data including which of surface portions of the surface to be cleaned is a carpeted surface portion and which is a hard floor surface portion. Thus, the control arrangement as such may be configured to establish a map and/or a positional data table of the surface to be cleaned. The map and/or data table may include one or more carpeted surface portions and one or more hard floor surface portions.

According to embodiments, the control arrangement may comprise a handheld device configured, upon input from a user, to initiate disengagement of the second brush from the main body and/or to initiate engagement of the second brush with the main body. In this manner, the second/side brush may be disengaged by the user and picked up, e.g. for inspection and cleaning of the second/side brush. Thereafter, the user may place the second/side brush e.g. in a dedicated position on the stationary base station and command engagement of the second/side brush with the main body. Additionally or alternatively, in this manner, a user may control whether the second/side brush is to be utilised during a particular cleaning operation.

According to a further aspect, there is provided a method for operating a robotic cleaner system comprising a robotic vacuum cleaner configured for autonomous travel along a surface to be cleaned and a stationary base station. The surface to be cleaned comprises a carpeted surface portion. The robotic vacuum cleaner comprises a first brush arranged to rotate about a horizontal axis and a second brush in the form of a side brush arranged to rotate about a substantially vertical axis, the second brush being detachably connected to a main body of the robotic vacuum cleaner. The method comprises steps of:
determining a position of the carpeted surface portion,
disengaging the second brush from the main body of the robotic vacuum cleaner in the stationary base station,
exiting the robotic vacuum cleaner from the stationary base station without the second brush, and
cleaning the carpeted surface portion with the robotic vacuum cleaner without the second brush.

Since the carpeted surface portion is determined, the side brush is disengaged in the stationary base station, the robotic cleaner exits the base station without the side brush and cleaning of the carpeted surface portion is done without the side brush, unnecessary wear of the side brush due to use on carpeted surface portions is avoided. Accordingly, in the method as with the robotic cleaner system, the side brush will have a longer service life than if used on carpeted surface portions.

Accordingly, of the first and second brushes, the robotic vacuum cleaner only uses the first brush during the step of cleaning the carpeted surface portion without the second brush.

After the step of cleaning the carpeted surface portion without the second brush, the robotic vacuum cleaner may return to the stationary base station.

According to embodiments, the surface to be cleaned may comprise a hard floor surface portion, and the method may comprise steps of:
determining a position of the hard floor surface portion,
engaging the second brush with the main body in the stationary base station,
exiting the robotic vacuum cleaner from the stationary base station with the second brush, and
cleaning the hard floor surface portion with the robotic vacuum cleaner with the first and second brushes. In this manner, the hard floor surface portion may be cleaned by the robotic vacuum cleaner with the assistance of the second brush, as opposed to when cleaning the carpeted surface portion without the second brush.

After the step of cleaning the hard floor surface portion with the first and second brushes, the robotic vacuum cleaner may return to the stationary base station.

Further features of, and advantages will become apparent when studying the appended claims and the following detailed description.

### BRIEF DESCRIPTION OF THE DRAWINGS

Various aspects and/or embodiments, including particular features and advantages, will be readily understood from the example embodiments discussed in the following detailed description and the accompanying drawings, in which:
Fig. 1 illustrates a robotic cleaner system,
Fig. 2 schematically illustrates a robotic vacuum cleaner,
Figs. 3a and 3b illustrate cleaning with a robotic cleaner system,
Figs. 4a and 4b illustrate bottom views of a robotic vacuum cleaner according to embodiments,
Fig. 5 illustrates a robotic cleaner system arranged at a surface to be cleaned, and
Fig. 6 illustrates a method for operating a robotic cleaner system according to embodiments.

### DETAILED DESCRIPTION

Aspects and/or embodiments will now be described more fully. These aspects and/or embodiments may, however, be embodied in many different forms and should not be construed as limiting; rather, they are provided by way of example so that this disclosure will be thorough and complete, and to fully convey the scope of all aspects to those skilled in the art. Like numbers refer to like elements throughout. Well-known functions or constructions will not necessarily be described in detail for brevity and/or clarity.

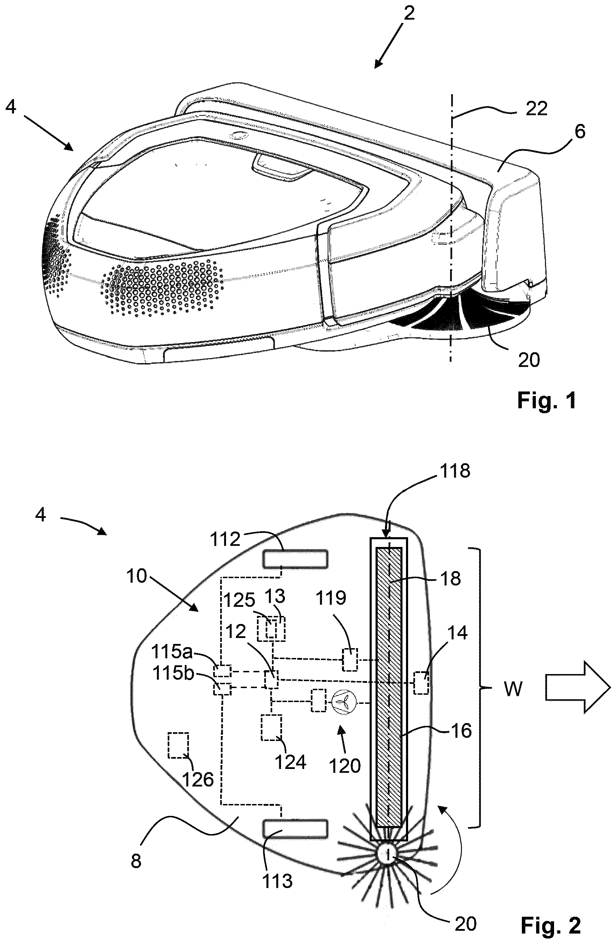

**Fig. 1** illustrates a robotic cleaner system 2 comprising a robotic vacuum cleaner 4 and a stationary base station 6. The robotic vacuum cleaner 4 is configured for autonomous travel along a surface to be cleaned.

During use of the robotic cleaner system 2, the stationary base station 6 is positioned in connection with the surface to be cleaned. The robotic vacuum cleaner 4 may be parked in the stationary base station 6 during inoperative periods of the robotic vacuum cleaner 4.

The stationary base station 6 may comprise a battery charging apparatus configured to charge a battery of the robotic vacuum cleaner 4.

**Fig. 2** schematically illustrates a robotic vacuum cleaner 4 according to embodiments in a bottom view. The robotic vacuum cleaner 4 may be a robotic vacuum cleaner 4 as discussed above with reference to **Fig. 1****.**

Accordingly, in **Fig. 2** the underside of the robotic vacuum cleaner 4 is shown. The broad arrow indicates a main traveling direction of the robotic vacuum cleaner 4.

The robotic vacuum cleaner 4 comprises a main body 8 housing components such as a propulsion system comprising driving means in the form of two electric wheel motors 115a, 115b for enabling movement of driving wheels 112, 113 of the robotic vacuum cleaner 4 such that the robotic vacuum cleaner 4 can be moved over a surface to be cleaned. Each wheel motor 115a, 115b is capable of controlling the respective driving wheel 112, 113 to rotate independently of each other in order to move the robotic vacuum cleaner 4 across the surface to be cleaned. A number of different driving wheel arrangements, as well as various wheel motor arrangements, can be envisaged, and the present disclosure is not limited to any particular kind of propulsion system.

It should be noted that the robotic vacuum cleaner 4 may have any appropriate shape, such as a device having a more circular-shaped main body, or a more triangular-shaped main body. The propulsion system may be arranged to cause the robotic vacuum cleaner 4 to perform any one or more of a yaw, pitch, or translation movement.

The robotic vacuum cleaner 4 comprises a control arrangement 10 adapted to control the robotic vacuum cleaner 4. The control arrangement 10 comprises a calculation unit 12 which may take the form of substantially any suitable type of processor circuit or microcomputer, e.g. a circuit for digital signal processing (digital signal processor, DSP), a Central Processing Unit (CPU), a processing unit, a processing circuit, a processor, an Application Specific Integrated Circuit (ASIC), a microprocessor, or other processing logic that may interpret and execute instructions. The herein utilised expression calculation unit 12 may represent a processing circuitry comprising a plurality of processing circuits, such as, e.g., any, some or all of the ones mentioned above. Accordingly, the calculation unit 12 may be a distributed calculation unit 12 comprising more than one processor circuit/microcomputer. The control arrangement 10 comprises a memory unit 13. The calculation unit 12 is connected to the memory unit 13, which provides the calculation unit 12 with, for example, stored programme code and/or stored data which the calculation unit 12 needs to enable it to do calculations, and/or map data of the surface to be cleaned, and/or one or more tables containing positional data of the surface to be cleaned. The calculation unit 12 may also be adapted to storing partial or final results of calculations in the memory unit 13. The memory unit 13 may comprise a physical device, such as a Random Access Memory (RAM), a Flash memory or a hard disk drive, utilised to store data or programs, i.e., sequences of instructions, on a temporary or permanent basis.

The calculation unit 12 is arranged to execute a computer program 125 stored in the memory unit 13. The calculation unit 12 is arranged to carry out a method according to aspects and/or embodiments discussed herein. The method may be implemented at least partially by an appropriate computer program 125 comprising computer-executable instructions. The computer program 125 may be transferred to the memory unit 13 by means of a suitable computer program product, such as a digital versatile disc (DVD), compact disc (CD) or a memory stick. As a further alternative, the computer program 125 may be downloaded to the memory unit 13 over a wired or wireless network.

The control arrangement 10 may comprise actuators such as the wheel motors 115a, 115b and/or sensors.

The calculation unit 12 controls the wheel motors 115a, 115b to rotate the driving wheels 112, 113 as required in view of information provided by the map data and/or positional data table/s and/or in view of information received from an obstacle detecting device for detecting obstacles e.g. in the form of walls, floor lamps, table legs, around which the robotic vacuum cleaner 4 must navigate during use thereof. The obstacle detecting device may be embodied in the form of any suitable sensor 14, such as a 3D sensor system registering its surroundings, implemented by means of e.g. a 3D camera, a camera in combination with lasers, a laser scanner, etc. for detecting obstacles and communicating information about any detected obstacle to the calculation unit 12. The calculation unit 12 communicates with the wheel motors 115a, 115b to control movement of the wheels 112, 113 in accordance with information provided by the map data and/or the positional data table/s and/lor the obstacle detecting device such that the robotic vacuum cleaner 4 can move as desired across the surface to be cleaned.

The control arrangement 10 also may comprise one or more sensors 14 for determining surface related data of the surface to be cleaned. Such surface related data may relate to a texture of the surface to be cleaned and may be utilised for identifying e.g. carpeted and hard floor surface portions of the surface to be cleaned. The sensor 14 for determining surface related data may be the same sensor or sensors as the sensor system registering the surroundings of the robotic vacuum cleaner 4 as discussed above.

Moreover, the main body 8 of the robotic vacuum cleaner 4 comprises a motor fan unit 120 creating an airflow for transporting dust and/or debris from a nozzle inlet 118 to a receptacle for dust and/or debris, such as a dust bag or cyclone arrangement (not shown) housed in the main body 8. The nozzle opening 118 is arranged at the bottom side of the main body 8. The control arrangement 10 may control the motor fan unit 120.

The robotic vacuum cleaner 4 comprises a first brush 16 arranged to rotate about a horizontal axis 18 extending substantially perpendicularly to the main traveling direction of the robotic vacuum cleaner 4. In order to rotate the first brush 16, a motor 119 is operatively coupled to the first brush 16 to control its rotation in line with instructions received from the calculation unit 12.

The first brush 16 has a first brush width W along the horizontal axis 18. The first brush 16 may be arranged in the main body 8 in connection with the nozzle inlet 118. The first brush 16 may be a brush roll comprising one or more of bristles, tufts of bristles, flexible ribs, etc. configured to engage with dust and/or debris when the first brush 16 is rotated in order to transport and/or move and/or propel dust and/or debris into or towards the nozzle inlet 118. Thus, the first brush 16 is arranged to enhance the dust and debris collecting properties of the robotic vacuum cleaner 4.

The robotic vacuum cleaner 4 comprises a second brush 20 arranged to rotate about a substantially vertical axis 22, see also **Fig. 1****.** The second brush 20 is a side brush comprising bristles extending laterally outside the first brush width W seen along the main traveling direction.

The second/side brush 20 comprises bristles extending laterally beyond the main body 8 seen along the main traveling direction.

The second/side brush 20 is provided with radially extending bristles, i.e. a main direction in which the bristles extend is in a radial direction from the axis 22 of the side brush. During use of the second/side brush 20, a large portion of the bristles extends in parallel to the surface to be cleaned and engage with the surface to be cleaned. The bristles extend in a flat plane or a conical plane from the axis 22, i.e. the bristles are only arranged to a limited extent along with the axis 22 of the side brush 20. In these embodiments the bristles of the side brush extend beyond the main body 8, seen in the bottom view of **Fig. 2****.** In alternative embodiments, the bristles may not reach beyond the main body 8 but may extend only to an edge of the main body 8.

The side brush 20 is arranged to propel dust and debris from a lateral side portion of the robotic vacuum cleaner 4 to underneath the robotic vacuum cleaner 4 such that the dust and debris may be propelled or drawn into the nozzle inlet 118. The side brush 20 may be arranged adjacent to the nozzle inlet 118.

The robotic vacuum cleaner 4 comprises one or more batteries 126 configured for supplying electric power to electric power consuming entities of the robotic vacuum cleaner 4, such as the different electric motors, components of the control arrangement, etc.

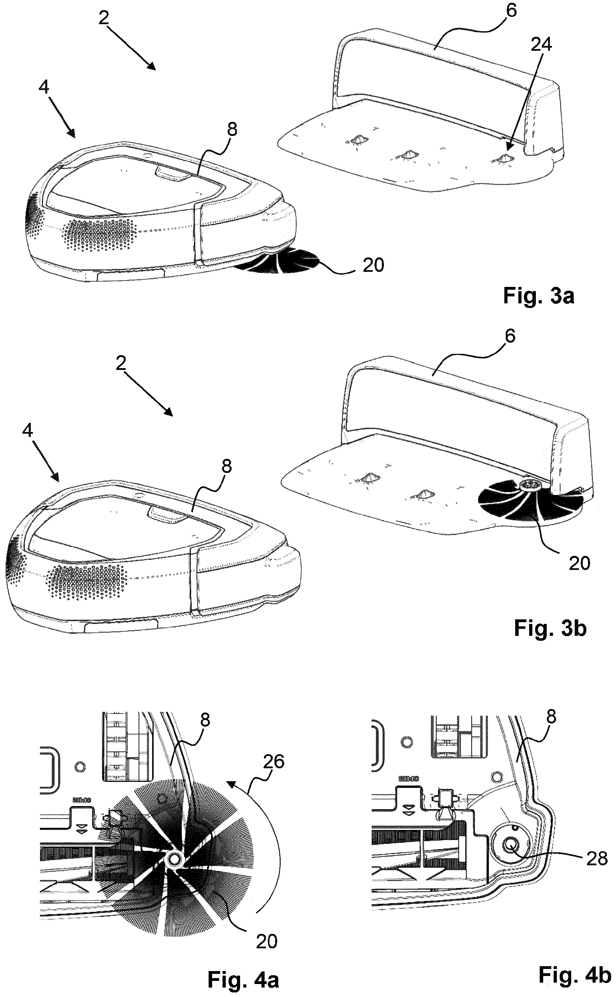

**Figs. 3a and 3b** illustrate cleaning with the robotic cleaner system 2 discussed above with reference to **Figs. 1 and 2****.**

It has been realised that a side brush 20 of a robotic vacuum cleaner 4 is subjected to substantial wear when used on carpeted surfaces.

Accordingly, the second/side brush 20 is detachably connected to the main body 8 of the robotic vacuum cleaner 4. Further, the control arrangement of the robotic vacuum cleaner 4 is configured to disengage the second brush 20 from the main body 8 in the stationary base station 6 when a surface portion of the surface to be cleaned is a carpeted surface portion.

Thus, the robotic vacuum cleaner 4 of the robotic cleaner system 2, may clean a surface to be cleaned with or without the second/side brush 20. A hard floor surface portion may be cleaned with the robotic vacuum cleaner 4 using the side brush 20 as shown in **Fig. 3a****.** If the robotic vacuum cleaner 4 has to pass over a carpeted surface portion with the second/side brush 20 engaged with the main body 8 of the robotic vacuum cleaner 4, the second/side brush 20 may be standing still (non-rotating) when passing over the carpeted surface portion.

A carpeted surface portion may be cleaned with the robotic vacuum cleaner 4 without the use the side brush 20. During carpeted surface portion cleaning, the side brush 20 remains in the stationary base station 6, as shown in **Fig. 3b****.**

Hence, the side brush 20 is not subjected to wear during cleaning of the carpeted surface portion.

The stationary base station 6 is configured for receiving the side brush 20. For instance, the stationary base station 6 may comprise a dedicated arrangement 24, e.g. comprising a pin and/or a magnet, for holding and/or positioning the side brush 20 in the stationary base station 6. Thus, reliable and repeatable disengaging of the side brush 20 from the main body 8 and engaging the side brush 20 with the main body 8 may be achieved.

**Figs. 4a and 4b** illustrate bottom views of a portion of a robotic vacuum cleaner 4 according to embodiments. The robotic vacuum cleaner 4 may be a robotic vacuum cleaner 4 as discussed above in connection with **Figs. 1** - **3b** and the related robotic cleaner system 2.

In **Fig. 4a** the second/side brush 20 is engaged with the main body 8 of the robotic vacuum cleaner 4. In **Fig. 4b** the second/side brush 20 has been disengaged from the main body 8.

Disengaging and engaging the second/side brush 20 from/with the main body 8 may be accomplished in a number of different ways.

According to some embodiments, the second brush 20 may have a primary rotational direction 26 applied during cleaning of the surface to be cleaned, and the second brush 20 may be configured to be disengaged from the main body 8 by rotation of the second brush 20 in a rotational direction opposite to the primary rotational direction 26. In this manner, a drive member of the second/side brush 20 may be utilised for disengaging and engaging the second/side brush 20 from/with the main body 8. During a cleaning operation utilising the second/side brush 20 it rotated in the primary rotational direction 26 by the drive member and thus, remains engaged with the main body 8. In order to disengage the second/side brush 2, e.g. in the stationary base station 6, the rotational direction of the drive member is reversed. The drive member of the second brush 20 may comprise an electric motor. The electric motor may be reversible in order to disengage the second brush 20 from the main body 8 as discussed above.

In order to implement such embodiments, a rotor shaft 28 of the second/side brush 20 may comprise external threads which are configured to engage with internal threads provided in a hub of the second/side brush 20. Alternatively, a bayonet coupling may be provided.

Additionally, one or more magnetic members may be utilised in order to position and/or attach the second/side brush 20 to the rotor shaft 28.

According to alternative embodiments, the second brush 20 and or a portion of a drive member of the second brush 20 may comprise one or more magnetic members. Such magnetic members draw the second brush 20 to engage with the main body 8. A mechanism comprising e.g. a lever may be utilised for disengaging the second brush 20 from the main body 8.

The drive member of the second/side brush 20 forms part of the main body 8. Accordingly, herein the second/side brush 20 disengaging from and engaging with the main body 8 relates to disengaging from, and engaging with, the drive member of the second/side brush 20.

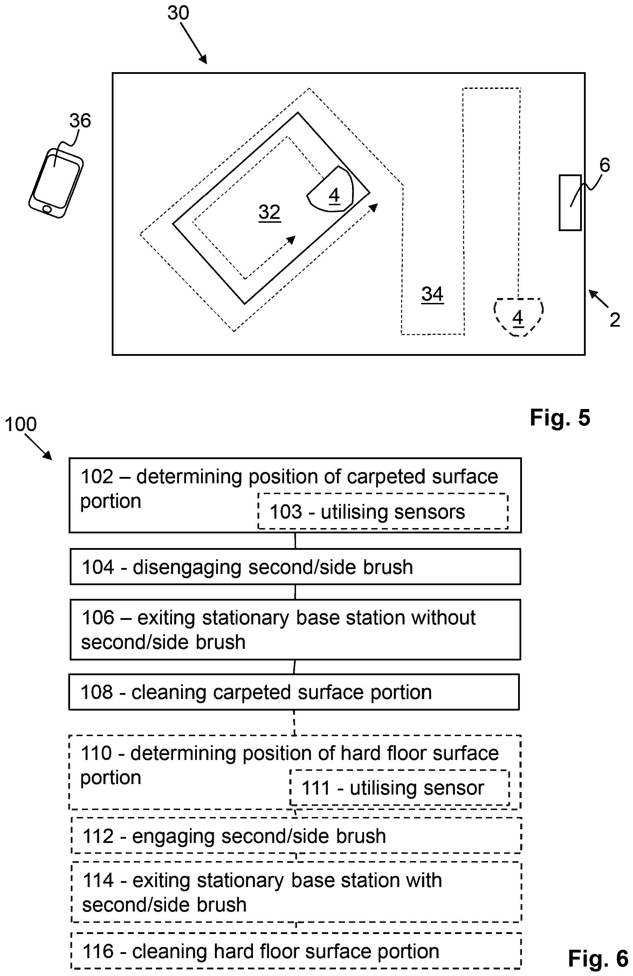

**Fig. 5** illustrates the robotic cleaner system 2 arranged at a surface 30 to be cleaned. The surface 30 to be cleaned comprises a carpeted surface portion 32 and a hard floor surface portion 34.

The stationary base station 6 of the robotic cleaner system 2 is positioned in connection with the surface 30 to be cleaned.

With reference to **Figs. 1-5** embodiments of the control arrangement 10 will be discussed in the following. The control arrangement 10 may be configured for performing a method 100 as discussed below with reference to **Fig. 6****.**

As mentioned above, the control arrangement 10 of the robotic vacuum cleaner 4 is configured to disengage the second/side brush 20 from the main body 8 in the stationary base station 6 when a surface portion of the surface 30 to be cleaned is a carpeted surface portion 32.

In **Fig. 5** the robotic vacuum cleaner 4 (indicated with full lines) travels about the carpeted surface portion 32. The carpeted surface portion 32 is cleaned by the robotic vacuum cleaner 4 without the use of the second/side brush 20.

The control arrangement 10 is configured to engage the second/side brush 20 with the main body 8 in the stationary base station 6 when a surface portion of the surface 30 to be cleaned is a hard floor surface portion 34.

In **Fig. 5** the robotic cleaner 4 (indicated with broken lines) travels about the hard floor surface portion 34 avoiding the carpeted surface portion 32. The hard floor surface portion 34 is cleaned with the assistance of the second/side brush 20.

The control arrangement 10 may be configured to store surface related data of the surface 30 to be cleaned. The surface related data may comprise positional data related to the carpeted surface portion 32 and/or to the hard floor surface portion 34. Thus, the control arrangement 10 may be provided with positional data of the surface 30 to be cleaned. The positional data may be provided in the form of a map or a data table as discussed above and includes positional data of the carpeted surface portion 32 and/or the hard floor surface portion 34.

According to some embodiments, the control arrangement 10 may comprise one or more sensors 14 for determining part of the surface related data. The one or more sensors 14 may be utilised for determining the carpeted surface portion 32 and/or the hard floor surface portion 34. That is, the one or more sensors 14 may be utilised for determining positional data related to the carpeted surface portion 32 and/or related to the hard floor surface portion 34.

Thus, the control arrangement 10 as such may be configured to establish positional data of the carpeted surface portion 32 and/or the hard floor surface portion 34.

According to some embodiments, a user may provide the positional data related to the carpeted surface portion 32 and/or to the hard floor surface portion 34 to the control arrangement 10.

For instance, the control arrangement 10 may comprise a handheld device 36, such as a mobile telephone or a touch pad comprising an application for wirelessly providing input to the robotic vacuum cleaner 4. Certain functions of the robotic vacuum cleaner 4 may be programmed via the handheld device 36.

The handheld device 36 or a different handheld device may be configured, upon input from a user, to initiate disengagement of the second/side brush 20 from the main body 8 and/or to initiate engagement of the second/side brush 20 with the main body 8. Thus, a user is provided control over engagement and disengagement of the second/side brush 20 with the main body 8 of the robotic vacuum cleaner 4.

The surface 30 to be cleaned may comprise more than one carpeted surface portion and/or more than one hard floor surface portion. One or more of the herein discussed aspects and/or embodiments related to the cleaning of the surface 30 to be cleaned may relate to all of its carpeted surface portions and/or its hard floor surface portions.

**Fig. 6** illustrates a method 100 for operating a robotic cleaner system according to embodiments. The robotic cleaner system may be a robotic cleaner system 2 as discussed above with reference to **Figs. 1 - 5****.** Accordingly, in the following reference is also made to **Figs. 1 - 5****.**

Accordingly, the robotic cleaner system 2 comprising a robotic vacuum cleaner 4 configured for autonomous travel along a surface 30 to be cleaned and a stationary base station 6. The surface 30 to be cleaned comprises a carpeted surface portion 32.

The method 100 comprises steps of:
- determining 102 a position of the carpeted surface portion 32,
- disengaging 104 a second/side brush 20 from a main body 8 of the robotic vacuum cleaner 4 in the stationary base station 6,
- exiting 106 the robotic vacuum cleaner 4 from the stationary base station 6 without the second/side brush 20, and
- cleaning 108 the carpeted surface portion 32 with the robotic vacuum cleaner 4 without the second/side brush 20.

The step of determining 102 a position of the carpeted surface portion 32 may be performed by the robotic vacuum cleaner 4 during a dedicated (non-cleaning) inspecting operation of the surface 30 to be cleaned. During such a dedicated inspecting operation, also a position of a hard floor surface portion 34 of the surface 30 to be cleaned may be determined.

Alternatively, the step of determining 102 a position of the carpeted surface portion 32 may be performed by the robotic vacuum cleaner 4 during a cleaning operation of the surface 30 to be cleaned by the robotic vacuum cleaner 4. Such a cleaning operation may be interrupted in order to perform the step of disengaging 104 the second brush 20 from the main body 8. Prior to such interrupting, the robotic vacuum cleaner 4 may clean the surface 30 to be cleaned adjacent to the carpeted surface portion 32, i.e. a hard floor portion 34 of the surface 30 to be cleaned.

Prior to the steps 102, 104, 106, and 108 a hard floor surface portion 34 of the surface 30 to be cleaned may be cleaned by the robotic vacuum cleaner 4, e.g. including steps 110, 112, 114, and 120 as discussed below.

According to some embodiments, the robotic vacuum cleaner 4 may comprise one or more sensors 14, and the step of determining 102 a position of the carpeted surface portion 32 may comprise a step of:
- utilising 103 the one or more sensors 14 for determining the position of the carpeted surface portion 32. In this manner, the robotic vacuum cleaner 4, during a dedicated inspecting operation of the surface 30 to be cleaned or during a cleaning operation of the surface 30, utilising the one or more sensors 14 positional data of the carpeted surface portion 32 may be determined.

As a further alternatively, the step of determining 102 a position of the carpeted surface portion 32 may be performed by accessing a stored map of the surface 30 to be cleaned and/or a stored table comprising positional data of the surface 30 to be cleaned. The map and/or table may be stored in the control arrangement 10 of the robotic vacuum cleaner 4. The map and/or table may have been established by the control arrangement 10 of the robotic vacuum cleaner 4 as discussed above or with the assistance of a user, e.g. by inputting into the control arrangement 10 a position of the carpeted surface portion 32 and/or a position of the hard floor surface portion 34.

The step of determining 102 a position of the carpeted surface portion 32 may be performed indirectly, by instead determining a position of the hard floor surface portion 34. In such indirect determining, the carpeted surface portion 32 is interpreted to be the surface portion not determined as the hard floor surface portion 34.

The surface 30 to be cleaned may comprise a hard floor surface portion 34. The method 100 may comprise steps of:
- determining 110 a position of the hard floor surface portion 34,
- engaging 112 the second/side brush 20 with the main body 8 in the stationary base station 6,
- exiting 114 the robotic vacuum cleaner 4 from the stationary base station 6 with the second/side brush 20, and
- cleaning 116 the hard floor surface portion 34 with the robotic vacuum cleaner 4 with the first and second brushes 16, 20.

The step of determining 110 a position of the hard floor surface portion 34 may be performed as discussed above during a dedicated inspecting operation or a cleaning operation of the robotic vacuum cleaner 4 or with the assistance of a user.

According to some embodiments, the robotic vacuum cleaner 4 comprises one or more sensors 14 and the step of determining 110 a position of the hard floor surface portion 34 may comprise a step of:
- utilising 111 the one or more sensors 14 for determining the position of the hard floor surface portion 34.

Alternatively, the step of determining 110 the position of the hard floor surface portion 34 may be performed by accessing a stored map of the surface 30 to be cleaned and/or a stored data table comprising positional data of the surface 30 to be cleaned. Again, the map and/or data table may be stored in a control arrangement 10 of the robotic vacuum cleaner 4.

Similar to the step of determining 102 a position of the carpeted surface portion 32, the step of determining 110 a position of the hard floor surface portion 34 may be performed indirectly, i.e. by determining a position of the carpeted surface portion 32. In such indirect determining, the hard floor surface portion 34 is interpreted to be the surface portion not determined as the carpeted surface portion 32.

As mentioned above, the steps 110, 112, 114, and 120 may be performed prior to the steps 102, 104, 106, and 108.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the invention, as defined by the appended claims.

## Claims

1. A robotic cleaner system (2) comprising a robotic vacuum cleaner (4) configured for autonomous travel along a surface (30) to be cleaned and a stationary base station (6), the robotic vacuum cleaner (4) comprising
a first brush (16) arranged to rotate about a horizontal axis (18) extending substantially perpendicularly to a main traveling direction of the robotic vacuum cleaner (4) and having a first brush width (W) along the horizontal axis (18),
a second brush (20) arranged to rotate about a substantially vertical axis (22), and
a control arrangement (10), wherein
the second brush (20) is detachably connected to a main body (8) of the robotic vacuum cleaner (4), and wherein
the stationary base station (6) is configured for receiving the second brush (20),
**characterised in that**
the second brush (20) is a side brush (20) comprising bristles extending laterally outside the first brush width (W) seen along the main traveling direction, and
the control arrangement (10) is configured to disengage the second brush (20) from the main body (8) in the stationary base station (6) when a surface portion of the surface (30) to be cleaned is a carpeted surface portion (32).

2. The robotic cleaner system (2) according to claim 1, wherein the control arrangement (10) is configured to engage the second brush (20) with the main body (8) in the stationary base station (6) when a surface portion of the surface (30) to be cleaned is a hard floor surface portion (34).

3. The robotic cleaner system (2) according to claim 2, wherein the control arrangement (10) is configured to store surface related data of the surface (30) to be cleaned, the surface related data comprising positional data related to the carpeted surface portion (32) and/or to the hard floor surface portion (34).

4. The robotic cleaner system (2) according to claim 3, wherein the control arrangement (10) comprises one or more sensors (14) for determining part of the surface related data, and wherein the one or more sensors (14) is/are utilised for determining the carpeted surface portion (32) and/or the hard floor surface portion (34).

5. The robotic cleaner system (2) according to any one of claims 2 - 4, wherein the second brush (20) has a primary rotational direction (26) applied during cleaning of the surface (30) to be cleaned, and wherein the second brush (20) is configured to be disengaged from the main body (8) by rotation of the second brush (20) in a rotational direction opposite to the primary rotational direction (26).

6. The robotic cleaner system (2) according to any one of claims 2 - 5, wherein the control arrangement (10) comprises a handheld device (36) configured, upon input from a user, to initiate disengagement of the second brush (20) from the main body (8) and/or to initiate engagement of the second brush (20) with the main body (8).

7. The robotic cleaner system (2) according to any one of the preceding claims, wherein the second brush (20) comprises bristles extending laterally beyond the main body (8) seen along the main traveling direction.

8. The robotic cleaner system (2) according to any one of the preceding claims, wherein the stationary base station (6) comprises a battery charging apparatus configured to charge a battery (126) of the robotic vacuum cleaner (4).

9. A method (100) for operating a robotic cleaner system (2) comprising a robotic vacuum cleaner (4) configured for autonomous travel along a surface (30) to be cleaned and a stationary base station (6), wherein
the surface (30) to be cleaned comprises a carpeted surface portion (32), wherein
the robotic vacuum cleaner (4) comprises a first brush (16) arranged to rotate about a horizontal axis (18) and a second brush (20) in the form of a side brush (20) arranged to rotate about a substantially vertical axis (22), the second brush (20) being detachably connected to a main body (8) of the robotic vacuum cleaner (4), **characterised in that**,
the method (100) comprises steps of:
determining (102) a position of the carpeted surface portion (32),
disengaging (104) the second brush (20) from the main body (8) of the robotic vacuum cleaner (4) in the stationary base station (6),
exiting (106) the robotic vacuum cleaner (4) from the stationary base station (6) without the second brush (20), and
cleaning (108) the carpeted surface portion (32) with the robotic vacuum cleaner (4) without the second brush (20).

10. The method (100) according to claim 9, wherein the surface (30) to be cleaned comprises a hard floor surface portion (34), and wherein
the method (100) comprises steps of:
determining (110) a position of the hard floor surface portion (34),
engaging (112) the second brush (20) with the main body (8) in the stationary base station (6),
exiting (114) the robotic vacuum cleaner (4) from the stationary base station (6) with the second brush (20), and
cleaning (116) the hard floor surface portion (34) with the robotic vacuum cleaner (4) with the first and second brushes (16, 20).

11. The method (100) according to claim 9 or 10, wherein the robotic vacuum cleaner (4) comprises one or more sensors (14), and wherein the step of determining (102) a position of the carpeted surface portion (32) comprises a step of:
utilising (103) the one or more sensors (14) for determining the position of the carpeted surface portion (32).

12. The method (100) according to claim 10 or according to claims 10 and 11, wherein the robotic vacuum cleaner (4) comprises one or more sensors (14), and wherein the step of determining (110) a position of the hard floor surface portion (34) comprises a step of:
utilising (11) the one or more sensors (14) for determining the position of the hard floor surface portion (34).

## Patentansprüche

1. Roboterreinigersystem (2), das einen Roboterstaubsauger (4), der zum autonomen Verfahren entlang einer zu reinigenden Fläche (30) ausgelegt ist, und eine stationäre Basisstation (6) umfasst, wobei der Roboterstaubsauger (4) Folgendes umfasst eine erste Bürste (16), die angeordnet ist, sich um eine horizontale Achse (18) zu drehen, die sich im Wesentlichen senkrecht zu einer Hauptverfahrrichtung des Roboterstaubsaugers (4) erstreckt und eine erste Bürstenbreite (W) entlang der horizontalen Achse (18) aufweist,
eine zweite Bürste (20), die angeordnet ist, sich um eine im Wesentlichen vertikale Achse (22) zu drehen, und eine Steueranordnung (10), wobei
die zweite Bürste (20) lösbar mit einem Hauptkörper (8) des Roboterstaubsaugers (4) verbunden ist und wobei die stationäre Basisstation (6) zum Aufnehmen der zweiten Bürste (20) ausgelegt ist,
**dadurch gekennzeichnet, dass**
die zweite Bürste (20) eine Seitenbürste (20) ist, die Borsten umfasst, die sich, entlang der ersten Hauptverfahrrichtung gesehen, seitlich außerhalb der ersten Bürstenbreite (W) erstrecken, und
die Steueranordnung (10) dazu ausgelegt ist, die zweite Bürste (20) in der stationären Basisstation (6) aus dem Eingriff in den Hauptkörper (8) zu lösen, wenn ein Flächenabschnitt der zu reinigenden Fläche (30) ein Flächenabschnitt (32) mit Teppich ist.

2. Roboterreinigersystem (2) nach Anspruch 1, wobei die Steueranordnung (10) dazu ausgelegt ist, mit der zweiten Bürste (20) in der stationären Basisstation (6) in den Hauptkörper (8) einzugreifen, wenn ein Flächenabschnitt der zu reinigenden Fläche (30) ein Hartbodenflächenabschnitt (34) ist.

3. Roboterreinigersystem (2) nach Anspruch 2, wobei die Steueranordnung (10) dazu ausgelegt ist, flächenbezogene Daten der zu reinigenden Fläche (30) zu speichern, wobei die flächenbezogenen Daten Positionsdaten umfassen, die sich auf den Flächenabschnitt (32) mit Teppich und/oder auf den Hartbodenflächenabschnitt (34) beziehen.

4. Roboterreinigersystem (2) nach Anspruch 3, wobei die Steueranordnung (10) zum Bestimmen eines Teils der flächenbezogenen Daten einen oder mehrere Sensoren (14) umfasst und wobei der eine oder die mehreren Sensoren (14) zum Bestimmen des Flächenabschnitts (32) mit Teppich und/oder des Hartbodenflächenabschnitts (34) verwendet wird/werden.

5. Roboterreinigersystem (2) nach einem der Ansprüche 2-4, wobei die zweite Bürste (20) eine primäre Drehrichtung (26) umfasst, die beim Reinigen der zu reinigenden Fläche (30) angewandt wird, und wobei die zweite Bürste (20) dazu ausgelegt ist, durch Drehen der zweiten Bürste (20) in eine Drehrichtung, die der primären Drehrichtung (26) entgegengesetzt ist, aus dem Eingriff mit dem Hauptkörper (8) gelöst zu werden.

6. Roboterreinigersystem (2) nach einem der Ansprüche 2-5, wobei die Steueranordnung (10) eine Handvorrichtung (36) umfasst, die dazu ausgelegt ist, nach Eingabe durch einen Benutzer ein Lösen der zweiten Bürste (20) aus dem Eingriff in den Hauptkörper (8) zu initiieren und/oder einen Eingriff der zweiten Bürste (20) in den Hauptkörper (8) zu initiieren.

7. Roboterreinigersystem (2) nach einem der vorhergehenden Ansprüche, wobei die zweite Bürste (20) Borsten umfasst, die sich, entlang der Hauptverfahrrichtung gesehen, seitlich über den Hauptkörper (8) hinaus erstrecken.

8. Roboterreinigersystem (2) nach einem der vorhergehenden Ansprüche, wobei die stationäre Basisstation (6) eine Batterieladevorrichtung umfasst, die dazu ausgelegt ist, eine Batterie (126) des Roboterstaubsaugers (4) zu laden.

9. Verfahren (100) zum Betreiben eines Roboterreinigersystems (2), das einen Roboterstaubsauger (4), der zum autonomen Verfahren entlang einer zu reinigenden Fläche (30) ausgelegt ist und eine stationäre Basisstation (6) umfasst, wobei
die zu reinigende Fläche (30) einen Flächenabschnitt (32) mit Teppich umfasst, wobei
der Roboterstaubsauger (4) eine erste Bürste (16), die angeordnet ist, sich um eine horizontale Achse (18) zu drehen, und eine zweite Bürste (20) in der Form einer Seitenbürste (20), die angeordnet ist, sich um eine im Wesentlichen vertikale Achse (22) zu drehen, umfasst, wobei die zweite Bürste (20) lösbar mit einem Hauptkörper (8) des Roboterstaubsaugers (4) verbunden ist, **dadurch gekennzeichnet, dass**,
das Verfahren (100) folgende Schritte umfasst:
Bestimmen (102) einer Position des Flächenabschnitts (32) mit Teppich,
Lösen (104) der zweiten Bürste (20) aus dem Eingriff in den Hauptkörper (8) des Roboterstaubsaugers (4) in der stationären Basisstation (6),
Verlassen (106) der stationären Basisstation (6) durch den Roboterstaubsauger (4) ohne die zweite Bürste (20) und
Reinigen (108) des Flächenabschnitts (32) mit Teppich mit dem Roboterstaubsauger (4) ohne die zweite Bürste (20).

10. Verfahren (100) nach Anspruch 9, wobei die zu reinigende Fläche (30) einen Hartbodenflächenabschnitt (34) umfasst und wobei
das Verfahren (100) folgende Schritte umfasst:
Bestimmen (110) einer Position des Hartbodenflächenabschnitts (34),
Eingreifen (112) der zweiten Bürste (20) in den Hauptkörper (8) in der stationären Basisstation (6),
Verlassen (114) der stationären Basisstation (6) durch den Roboterstaubsauger (4) mit der zweiten Bürste (20) und
Reinigen (116) des Hartbodenflächenabschnitts (34) mit dem Roboterstaubsauger (4) mit der ersten und der zweiten Bürste (16, 20).

11. Verfahren (100) nach Anspruch 9 oder 10, wobei der Roboterstaubsauger (4) einen oder mehrere Sensoren (14) umfasst und wobei der Schritt des Bestimmens (102) einer Position des Flächenabschnitts (32) mit Teppich einen folgenden Schritt umfasst:
Verwenden (103) des einen oder der mehreren Sensoren (14) zum Bestimmen der Position des Flächenabschnitts (32) mit Teppich.

12. Verfahren (100) nach Anspruch 10 oder nach den Ansprüchen 10 und 11, wobei der Roboterstaubsauger (4) einen oder mehrere Sensoren (14) umfasst und wobei der Schritt des Bestimmens (110) einer Position des Hartbodenflächenabschnitts (34) einen folgenden Schritt umfasst:
Verwenden (11) des einen oder der mehreren Sensoren (14) zum Bestimmen der Position des Hartbodenflächenabschnitts (34).

## Revendications

1. Système (2) de nettoyage robotisé comportant un aspirateur robotisé (4) configuré pour un déplacement autonome le long d'une surface (30) à nettoyer et une station (6) de base fixe, l'aspirateur robotisé (4) comportant
une première brosse (16) agencée pour tourner autour d'un axe horizontal (18) s'étendant sensiblement perpendiculairement à une direction principale de déplacement de l'aspirateur robotisé (4) et présentant une largeur (W) de première brosse suivant l'axe horizontal (18),
une seconde brosse (20) agencée pour tourner autour d'un axe sensiblement vertical (22), et
un agencement (10) de commande,
la seconde brosse (20) étant liée de façon détachable à un corps principal (8) de l'aspirateur robotisé (4), et la station (6) de base fixe étant configurée pour recevoir la seconde brosse (20),
**caractérisé en ce que**
la seconde brosse (20) est une brosse latérale (20) comportant des poils qui s'étendent latéralement en dehors de la largeur (W) de première brosse vue suivant la direction principale de déplacement, et
l'agencement (10) de commande est configuré pour désolidariser la seconde brosse (20) du corps principal (8) dans la station (6) de base fixe lorsqu'une partie de surface de la surface (30) à nettoyer est une partie (32) de surface recouverte de moquette.

2. Système (2) de nettoyage robotisé selon la revendication 1, l'agencement (10) de commande étant configuré pour enclencher la seconde brosse (20) avec le corps principal (8) dans la station (6) de base fixe lorsqu'une partie de surface de la surface (30) à nettoyer est une partie (34) de surface à sol dur.

3. Système (2) de nettoyage robotisé selon la revendication 2, l'agencement (10) de commande étant configuré pour stocker des données liées à la surface de la surface (30) à nettoyer, les données liées à la surface comportant des données de position liées à la partie (32) de surface recouverte de moquette et/ou à la partie (34) de surface à sol dur.

4. Système (2) de nettoyage robotisé selon la revendication 3, l'agencement (10) de commande comportant un ou plusieurs capteurs (14) servant à déterminer une partie des données liées à la surface, et le ou les capteurs (14) étant utilisés pour déterminer la partie (32) de surface recouverte de moquette et/ou la partie (34) de surface à sol dur.

5. Système (2) de nettoyage robotisé selon l'une quelconque des revendications 2 à 4, la seconde brosse (20) possédant un sens (26) de rotation primaire appliqué pendant le nettoyage de la surface (30) à nettoyer, et la seconde brosse (20) étant configurée pour être désolidarisée du corps principal (8) par une rotation de la seconde brosse (20) dans un sens de rotation opposé au sens (26) de rotation primaire.

6. Système (2) de nettoyage robotisé selon l'une quelconque des revendications 2 à 5, l'agencement (10) de commande comportant un dispositif portatif (36) configuré, suite à une entrée de la part d'un utilisateur, pour amorcer la désolidarisation de la seconde brosse (20) du corps principal (8) et/ou pour amorcer l'enclenchement de la seconde brosse (20) avec le corps principal (8).

7. Système (2) de nettoyage robotisé selon l'une quelconque des revendications précédentes, la seconde brosse (20) comportant des poils qui s'étendent latéralement au-delà du corps principal (8) vu suivant la direction principale de déplacement.

8. Système (2) de nettoyage robotisé selon l'une quelconque des revendications précédentes, la station (6) de base fixe comportant un appareil de charge de batterie configuré pour charger une batterie (126) de l'aspirateur robotisé (4).

9. Procédé (100) d'exploitation d'un système (2) de nettoyage robotisé comportant un aspirateur robotisé (4) configuré pour un déplacement autonome le long d'une surface (30) à nettoyer et une station (6) de base fixe, la surface (30) à nettoyer comportant une partie (32) de surface recouverte de moquette,
l'aspirateur robotisé (4) comportant une première brosse (16) agencée pour tourner autour d'un axe horizontal (18) et une seconde brosse (20) sous la forme d'une brosse latérale (20) agencée pour tourner autour d'un axe sensiblement vertical (22), la seconde brosse (20) étant liée de façon détachable à un corps principal (8) de l'aspirateur robotisé (4), **caractérisé en ce que**
le procédé (100) comporte des étapes consistant à :
déterminer (102) une position de la partie (32) de surface recouverte de moquette,
désolidariser (104) la seconde brosse (20) du corps principal (8) de l'aspirateur robotisé (4) dans la station (6) de base fixe,
faire sortir (106) l'aspirateur robotisé (4) de la station (6) de base fixe sans la seconde brosse (20), et nettoyer (108) la partie (32) de surface recouverte de moquette à l'aide de l'aspirateur robotisé (4) sans la seconde brosse (20) .

10. Procédé (100) selon la revendication 9, la surface (30) à nettoyer comportant une partie (34) de surface à sol dur, et
le procédé (100) comportant des étapes consistant à :
déterminer (110) une position de la partie (34) de surface à sol dur,
enclencher (112) la seconde brosse (20) avec le corps principal (8) dans la station (6) de base fixe,
faire sortir (114) l'aspirateur robotisé (4) de la station (6) de base fixe avec la seconde brosse (20), et nettoyer (116) la partie (34) de surface à sol dur à l'aide de l'aspirateur robotisé (4) avec les première et seconde brosses (16, 20).

11. Procédé (100) selon la revendication 9 ou 10, l'aspirateur robotisé (4) comportant un ou plusieurs capteurs (14), et l'étape de détermination (102) d'une position de la partie (32) de surface recouverte de moquette comportant une étape consistant à :
utiliser (103) le ou les capteurs (14) pour déterminer la position de la partie (32) de surface recouverte de moquette.

12. Procédé (100) selon la revendication 10 ou selon les revendications 10 et 11, l'aspirateur robotisé (4) comportant un ou plusieurs capteurs (14), et l'étape de détermination (110) d'une position de la partie (34) de surface à sol dur comportant une étape consistant à :
utiliser (11) le ou les capteurs (14) pour déterminer la position de la partie (34) de surface à sol dur.
